**Europäisches Patentamt**

**European Patent Office**

**Office européen des brevets**

(11) Numéro de publication: **0 249 521
B1**

(12) **FASCICULE DE BREVET EUROPEEN**

(45) Date de publication du fascicule du brevet:
27.12.90

(51) Int. Cl.⁵: **G01F 23/24**

(21) Numéro de dépôt: **87401192.7**

(22) Date de dépôt: **27.05.87**

(54) Procédé et dispositif de mesure du niveau de la surface libre d'un liquide.

(30) Priorité: **04.06.86 FR 8608056**

(43) Date de publication de la demande:
**16.12.87 Bulletin 87/51**

(45) Mention de la délivrance du brevet:
**27.12.90 Bulletin 90/52**

(84) Etats contractants désignés:
**DE GB IT SE**

(56) Documents cités:
**EP-A- 0 139 874
EP-A- 0 166 034
FR-A- 2 367 276
GB-A- 2 107 883**

(73) Titulaire: **Siemens Aktiengesellschaft,
Wittelsbacherplatz 2, D-8000 München 2(DE)**

(72) Inventeur: **Ory, Philippe, 4, Lotissement de la Gare,
Hurtigheim F-67117 Ittenheim(FR)**

EP 0 249 521 B1

## Description

La présente invention est relative à un procédé et un dispositif de mesure du niveau de la surface libre d'un liquide contenu dans un réservoir, et, plus particulièrement, à un tel procédé et un tel dispositif basés sur le principe du capteur à fil chaud.

Un tel capteur est constitué par un fil métallique dont la résistance varie beaucoup avec la température. Un courant électrique qui traverse le fil provoque son échauffement et, par voie de conséquence, une augmentation de sa résistance électrique. Si alors le fil est partiellement immergé dans un liquide présentant un coefficient de conduction thermique différent de celui du milieu qui se trouve au-dessus de la surface libre du liquide (de l'air à la température ambiante, par exemple), le refroidissement du fil sera fonction du niveau de cette surface libre. Il s'ensuit que la température du fil, et donc sa résistance, sont liées à ce niveau. On peut alors déduire ce dernier d'une mesure de résistance électrique.

On décrit au brevet français N° 2 367 276 un dispositif de détection du niveau d'un liquide qui comprend un capteur à fil chaud. Le fil du capteur est alimenté à courant constant pendant un intervalle de temps prédéterminé et le niveau du liquide est détecté à partir de la différence des tensions aux bornes du fil, mesurées au début et à la fin de l'échauffement, respectivement. Ce dispositif présente l'inconvénient d'exiger une source de courant dont la constance doit être assurée avec précision, ce qui est difficile à réaliser dans un domaine de température étendu. En outre, du fait de la nature analogique des signaux traités dans le dispositif, il est délicat d'assurer une correction en fonction de la température ambiante, qui est en dépendance quadratique avec la résistance à froid du fil du capteur.

Le brevet français N° 2 514 497 décrit divers modes de réalisation de détecteurs de niveau à fil chaud équipés de moyens numériques de mesure, qui visent à améliorer la précision de la détection. Avec certains modes de réalisation on opère la détection à partir d'une différence de tensions ou de courants mesurée en absolu aux bornes du capteur, avant et après échauffement. D'autres modes de réalisation permettent de déduire le niveau d'une formule mathématique où la variable est la résistance du fil, calculée à partir d'une mesure simultanée de la tension et du courant aux bornes du capteur, avant et après échauffement. Dans uyne réalisation, un circuit pour stabiliser la tension aux bornes du fil du capteur est utilisé.

Les dispositifs qui dépendent de la mesure d'une différence de tensions ou de courants, en absolu, exigent l'utilisation d'un convertisseur analogique-numérique précis, à tension de référence précise du fait de la faible valeur de cette différence par rapport aux grandeurs électriques mesurées. En outre, la détermination de la dynamique de la tension d'entrée du convertisseur est délicate car les tensions à mesurer varient beaucoup avec la température ambiante et la sensibilité est faible.

D'autre part, la mesure simultanée de la tension et du courant aux bornes du capteur est difficile à mettre en oeuvre dans certaines applications. Par exemple, dans le cas de la mesure du niveau de liquides, essence, huile, etc... embarqués dans un véhicule automobile, l'alimentation des dispositifs électriques de mesure est assurée par la seule batterie. La masse du véhicule sert de potentiel de référence, malheureusement soumis à des fluctuations temporelles. Il en résulte que, lorsqu'on utilise un dispositif de mesure électrique équipé de moyens numériques et donc d'un convertiseur analogique-numérique, il n'est pas possible de relever deux tensions en les référençant simultanément à la masse. Pour pallier cet inconvénient, il faut alors avoir recours à des moyens de correction complexes et donc coûteux.

La présente invention a donc pour but de fournir un procédé de mesure du niveau de la surface libre d'un liquide contenu dans un réservoir, qui ne présente pas les inconvénients décrits ci-dessus, rencontrés dans la technique antérieure.

La présente invention a aussi pour but de réaliser un dispositif pour la mise en oeuvre de ce procédé, comprenant une source de tension constante moins coûteuse à réaliser et plus précise qu'une source de courant constant.

La présente invention a encore pour but de réaliser un tel dispositif de mesure, de sensibilité et de précision améliorées.

On atteint ces buts de l'invention avec un procédé de mesure du niveau de la surface libre d'un liquide contenu dans un réservoir et présentant une conductibilité thermique différente de celle du milieu situé au-dessus de cette surface libre, au moyen d'un capteur à fil chaud dont la résistance électrique varie fortement avec la température et d'un circuit pour stabiliser la tension aux bornes du fil du capteur, ce capteur étant agencé de manière à être plus ou moins refroidi par le liquide en fonction du niveau de sa surface libre, caractérisé en ce que (a) on échauffe le capteur jusqu'à une température To par effet Joule en l'alimentant sous tension constante , (b) on mesure le courant Io qui passe dans le fil du capteur à l'instant où la température To est atteinte et on coupe l'alimentation du capteur à cet instant, (c) on rétablit l'alimentation sous tension constante du fil du capteur à l'expiration d'un intervalle de temps $\tau$ prédéterminé mesuré à compter de l'instant de la coupure d'alimentation, pour relever le courant I passant dans le fil du capteur à l'expiration de cet intervalle de temps, et (d) on calcule le niveau du liquide à partir des valeurs de I et Io.

Pour la mise en oeuvre de ce procédé, l'invention fournit un dispositif comprenant un capteur à fil chaud alimenté par une source de tension et un circuit pour stabiliser la tension aux bornes du fil du capteur. Suivant l'invention ce dispositif comprend une unité de commande et de calcul munie d'un premier moyen qui commande le préchauffage par effet Joule du fil du capteur jusqu'à une température To, qui

2

coupe l'alimentation du capteur à l'instant où cette température est atteinte, et qui rétablit cette alimentation à l'expiration d'un intervalle de temps de refroidissement prédéterminé, d'un deuxième moyen qui mesure un paramètre fonction du courant passant dans le fil du capteur, aux deux instants bornant l'intervalle de temps de refroidissement, et d'un moyen de calcul sensible à ces mesures qui en déduit le niveau du liquide.

D'autres avantages et caractéristiques de la présente invention apparaîtront à la lecture de la description qui va suivre, associée à l'examen du dessin annexé dans lequel :

- la figure 1 représente schématiquement l'organisation d'un dispositif pour la mise en oeuvre du procédé de mesure suivant l'invention, et
- la figure 2 est un diagramme temporel utile à la compréhension du fonctionnement du procédé suivant l'invention, et
- la figure 3 représente le schéma de câblage d'un mode de réalisation d'un circuit électronique formant partie du dispositif suivant l'invention.

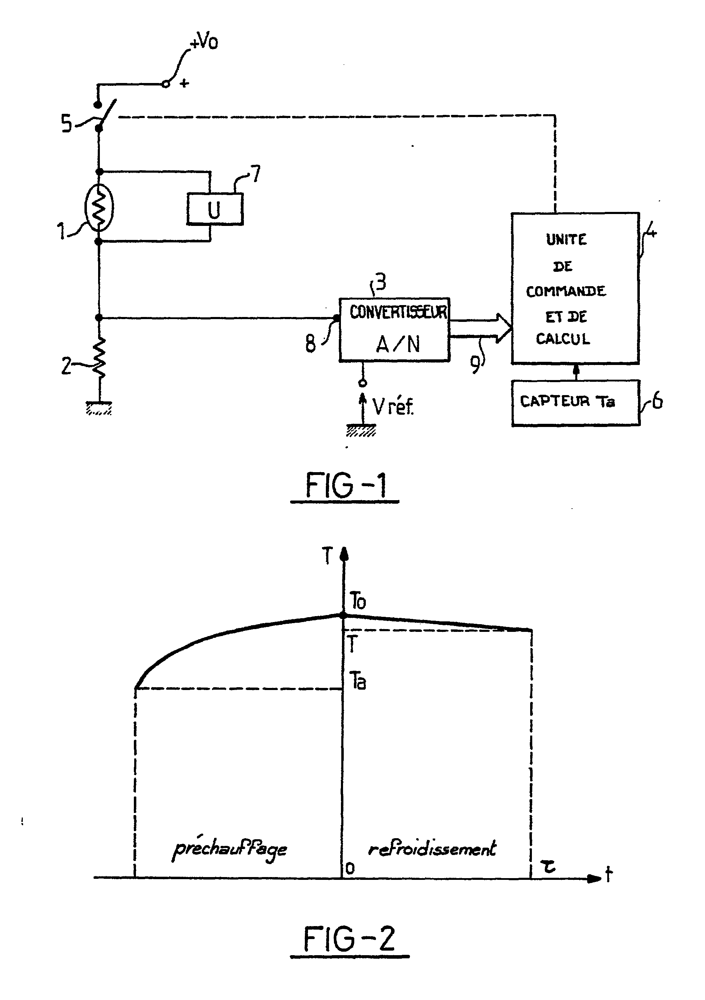

On se réfère à la figure 1 du dessin où il apparaît que le dispositif suivant l'invention comprend un capteur de niveau (1) à fil chaud connecté d'une part à une source de tension continue (+Vo) et d'autre part à une résistance (2) dont l'autre borne est à la masse. Le point commun au capteur (1) et à la résistance (2) est connecté à l'entrée d'un convertisseur analogique-numérique (3) dont la sortie (9) alimente une unité de commande et de calcul (4). Le convertisseur (3) est référencé à une tension $V_{ref}$ qui peut être la masse du système équipé du dispositif de mesure suivant l'invention.

Le fil du capteur plonge dans le liquide dont le niveau est à mesurer, au voisinage de la surface libre du liquide. De préférence, le fil est orienté dans une position inclinée par rapport à cette surface libre, pour accroître la sensibilité de la mesure.

Si le liquide est conducteur de l'électricité, il convient en outre d'isoler électriquement le fil du capteur.

Un interrupteur (5), commandé par l'unité de commande (4), permet de mettre sélectivement sous tension le dispositif suivant l'invention.

Ce dernier comprend en outre un détecteur (6) de température ambiante (ou température du liquide). Suivant un mode de réalisation de l'invention, ce détecteur est constitué par une thermistance à fort coefficient de température, placée en série avec une résistance fixe et de valeur connue.

Dans certaines applications où la température ambiante, et donc celle du liquide surveillé, varie peu, le détecteur (6) n'est pas nécessaire et peut être omis.

Suivant l'invention, on maintient à une valeur constante $\underline{v}$ la tension d'alimentation du fil du capteur (1), à l'aide d'un circuit stabilisateur de tension (7) connecté aux bornes du fil. L'intérêt de cette disposition apparaîtra dans la suite.

L'entrée (8) du convertisseur analogique-numérique est connectée au point commun à la résistance (2) et au capteur (1). Le convertisseur lit ainsi la tension V aux bornes de cette résistance, tension proportionnelle à l'intensité du courant traversant le capteur du fait de la constance de la tension $v$. Le si-gnal de sortie du convertisseur (3) est un nombre M, proportionnel à V/Vref. Ce signal de sortie alimente l'unité de commande et de calcul (4). Cette dernière comprend plusieurs moyens remplissant plusieurs fonctions : commande séquentielle de l'interrupteur (5), lecture du convertisseur (3), lecture de la température ambiante relevée par le détecteur (6), conservation en mémoire des mesures réalisées par le convertisseur, chronométrage de temps et exécutions de diverses opérations arithmétiques. En pratique, on utilise un microprocesseur convenablement programmé pour remplir les fonctions de l'unité de commande (4). Le microprocesseur référencé 6805 R2 dans les catalogues de la Société Motorola est particulièrement bien adapté à la présente application car il comprend des entrées d'acquisition de signaux analogiques, ce qui permet de se passer d'un convertisseur analogique-numérique distinct.

Le procédé de mesure suivant l'invention va être maintenant illustré par la description de la séquence de fonctionnement du dispositif décrit ci-dessus.

Pour procéder à une mesure du niveau du liquide qui mouille partiellement le capteur (1), l'unité de commande (4) commence par mesurer la température ambiante Ta (voir Fig. 2) relevée par le détecteur (6). Comme on l'a vu plus haut, cette étape peut être facultative.

L'unité (4) commande ensuite la fermeture de l'interrupteur (5) pour réaliser un pré-chauffage du fil du capteur par effet Joule. Le capteur (1) es: alors alimenté sous tension constante $v$, grâce au stabilisateur de tension (7). L'unité surveille l'intensité du courant circulant dans le capteur en prélevant la tension aux bornes de la résistance (2).

Dès que cette intensité descend en-dessous d'une valeur prédéterminée Io correspondant à une valeur Mo du nombre fourni par le convertisseur analogique-numérique (3) (ce qui signifie que la température du capteur (1) a atteint une valeur prédéterminée To), l'unité (4) commande l'ouverture de l'interrupteur (5) et déclenche un circuit de comptage de temps (instant t = o, Fig. 2).

Après un intervalle de temps $\underline{\tau}$, prédéterminé, l'unité (4) lit la valeur M du nombre fourni par le convertisseur (3), ce qui exige la fermeture, pendant le court moment nécessaire à la mesure, de l'interrupteur (5), fermeture temporaire évidemment commandée par l'unité de commande (4). La valeur M correspond au passage d'un courant I dans le fil du capteur.

On choisit $\tau$ en tenant compte de la constante de temps thermique du capteur (1), $\tau$ étant suffisamment grand pour que le capteur ait atteint son équilibre thermique.

L'unité (4) calcule alors le niveau du liquide à partir des valeurs Mo, M et, éventuellement, de la température ambiante Ta. On explicite ci-dessous les bases et les phases du calcul.

Pendant un intervalle de temps $dt$ de la période de refroidissement du capteur, la quantité de chaleur dQ échangée avec l'extérieur est :

$$dQ = K(T - Ta).dt = -Mcdt \quad (1)$$

T étant la température instantanée du capteur,
Ta la température ambiante,
K le coefficient de convection thermique du capteur, qui est fonction du niveau du liquide, et
Mc, la chaleur massique du capteur, qui est constante.

De la relation (1) on tire :

$$-\frac{K}{Mc}.dt = \frac{dT}{T-Ta} \quad (2)$$

L'intégration entre les instants t = o et t = donne :

$$-\frac{K}{Mc}.\tau = Log\frac{T-Ta}{To-Ta} \quad (3)$$

soit

$$exp\left(-\frac{K}{Mc}.\tau\right) = \frac{T-Ta}{To-Ta} = 1 - \frac{To-T}{To-Ta} \quad (4)$$

Le coefficient K étant représentatif du niveau du liquide, l'unité (4) calcule l'expression 1 - (To - T)/(To - Ta) pour atteindre une mesure de ce niveau.

Pour ce faire, on part de l'expression de M :

$$M = R_2 \times \frac{U}{kT} \quad (5)$$

où:
R$_2$ est l'impédance de la résistance (2),
$\upsilon$ la tension constante établie aux bornes du capteur (1),
R = kT, la résistance du capteur, considérée comme proportionnelle à sa température T.

Dans ces conditions le terme (To - T) de l'expression (4) peut se calculer à partir des valeurs Mo et M relevées par le calculateur aux instants t = o et t = $\tau$ respectivement,

$$\frac{1}{To}(To - T) = 1 - \frac{Mo}{M} \quad (6)$$

Le terme correctif 1/(To - Ta) peut être considéré comme une constante si la température ambiante Ta varie peu, To étant une constante.

Si la température ambiante varie sensiblement, ce terme correctif est pris en compte par l'unité de commande (4) qui reçoit une mesure de Ta par le détecteur (6). Le terme $1/(To - Ta)$ peut être tabulé en fonction de Ta et conservé dans une mémoire de l'unité de commande (4).

Le terme représentatif du niveau étant ainsi calculé par l'unité (4), celle-ci déduit le niveau lui-même, à l'aide de la courbe de réponse du capteur, tabulée et mise en mémoire dans l'unité (4) pour donner le niveau du liquide en fonction de Mo/M.

Diverses corrections peuvent alors être appliquées en fonction des paramètres du système équipé avec le dispositif de mesure de niveau d'un liquide suivant la présente invention.

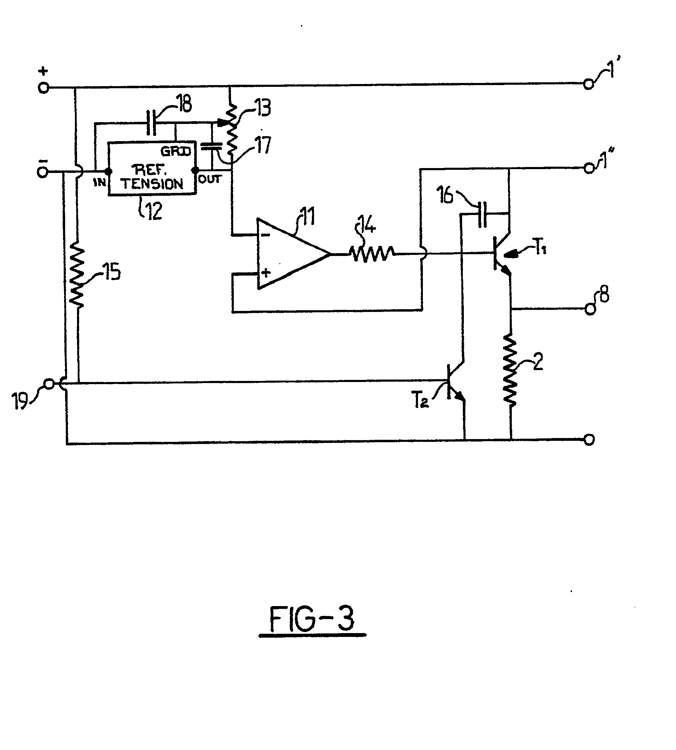

On se réfère maintenant à la Fig. 3 où l'on a représenté le schéma de câblage d'un circuit formant partie du dispositif suivant l'invention, dont l'organisation générale est présentée à la figure 1. Ce circuit a pour objet de commander l'alimentation sous tension constante du capteur (1) et d'établir ou de couper cette alimentation, sous la commande de l'unité (4). Il remplit donc les fonctions de l'interrupteur (5) et du bloc (7) de la figure 1.

Le circuit comprend essentiellement un amplificateur opérationnel (11) qui compare une tension de référence présentée sur son entrée négative à la tension existant aux bornes (1',1") du capteur (1), présentée sur son entrée positive. La sortie de l'amplificateur opérationnel (11) alimente, par l'intermédiaire d'une résistance (14), la base d'un transistor ($T_1$) qui commande le courant passant dans le capteur (1) et la résistance (2), aux bornes de laquelle le convertisseur analogique/numérique (3) prélève une tension d'entrée, comme on l'a vu plus haut. La tension dans la sonde est ainsi asservie à la tension de référence sur la borne négative de l'amplificateur (11).

La référence de tension qui alimente l'entrée négative de l'amplificateur (11) est obtenue à l'aide d'un circuit (12) associé à un pont diviseur (13). A titre d'exemple ce circuit (12) peut être constitué par le circuit intégré référence LM 7905 dans les catalogues de la Société Motorola, alimenté en négatif et connecté au pont diviseur (13) par sa sortie "GRD". Des capacités (16,17,18) sont ajoutées au circuit pour améliorer la stabilité des tensions. Bien entendu de nombreux autres circuits de référence de tension pourraient être substitués à celui décrit ci-dessus, ces circuits ainsi que leur installation étant bien connus de l'homme de métier.

Le circuit de la figure 3 commande aussi le passage du courant dans le capteur (1) grâce aux transistors ($T_1$) et ($T_2$), tous deux du type NPN, la base 19 de $T_2$ étant alimentée par un signal venu de l'unité de commande et de calcul (4). Les transistors ($T_1$, $T_2$) remplissent donc les fonctions de l'interrupteur (5) de la figure 1.

Ainsi lorsque l'unité (4) détecte que le courant dans le capteur (1) est tel que celui-ci atteint la température To, (nombre Mo à la sortie du convertisseur 3), un signal émis par l'unité (4) sur la base 19 du transistor ($T_2$) provoque la mise en conduction de celui-ci, la base (19) étant convenablement polarisée par une résistance (15). Le collecteur du transistor ($T_2$) est connecté à la base du transistor ($T_1$) qui se bloque alors pour couper la circulation du courant entre les bornes (1',1") du capteur (1), ce qui marque le début de la période de refroidissement.

A l'expiration de l'intervalle de temps $\tau$ prédéterminé l'unité de commande (4) bloque le transistor ($T_2$), ce qui débloque ($T_1$) pour permettre au convertissur analogique-numérique (3), connecté en 8, de procéder à la mesure du nombre $\underline{M}$, comme on l'a vu plus haut. L'unité de commande déduit alors le niveau du liquide à partir des valeurs mesurées Mo,M et de la courbe de réponse du capteur donnant le niveau en fonction de Mo/M.

Cette courbe de réponse est tabulée et mise en mémoire dans l'unité de commande. Bien entendu si, pour un capteur particulier, la courbe de réponse donnant le niveau du liquide en fonction de Mo/M présente une bonne linéarité, on peut tenir compte plus simplement de la réponse du capteur.

Ainsi, à la différence des dispositifs de mesure de la technique antérieure décrits dans le préambule de la présente description, on atteint le niveau du liquide à partir de mesures réalisées pendant une période de refroidissement du capteur et non pendant une période d'échauffement. La température ambiante peut être mesurée avec précision à l'aide d'un détecteur spécialisé.

Suivant l'invention, on mesure une diminution de température à partir d'une valeur initiale To constante et connue avec précision, par un réglage adéquat du préchauffage nécessaire à l'établissement de cette température dans le capteur. Du fait que les variations de température du capteur pendant la mesure sont faibles, la dynamique de mesure dépend beaucoup moins de la température ambiante : ceci permet de centrer au mieux cette dynamique et d'obtenir ainsi une sensibilité et une précision optimales.

En outre, le dispositif suivant l'invention utilise une source de tension constante, moins coûteuse et plus précise qu'une source de courant constant.

Le convertisseur analogique-numérique est utilisé en relatif par rapport à sa tension de référence, ce qui permet d'obtenir une précision supérieure à celle qu'on obtiendrait en absolu.

La tension de référence du convertisseur, la source de tension constante $\upsilon$, la résistance série $R_2$ n'interviennent que dans la détermination de la température To et non dans le terme Mo/M qui permet de calculer le niveau.

Le dispositif de mesure suivant l'invention présente encore l'avantage de permettre l'enchaînement de plusieurs mesures, ce qui n'est pas possible avec des dispositifs à échauffement du type de ceux décrits dans les brevets français précités.

Bien entendu l'invention n'est pas limitée au mode de réalisation décrit et représenté ci-dessus. Elle s'étend, par exemple, à un dispositif permettant de repérer la position de la surface séparant deux liquides non miscibles, pour autant que ceux-ci présentent des conductibilités thermiques différentes.

Elle s'étend aussi à un dispositif simplifié permettant de repérer la position de la surface libre du liquide par rapport à un ou plusieurs niveaux discrets pour signaler, par exemple, que le liquide atteint dans la cuve un niveau maximum ou minimum. Un tel dispositif peut comprendre un indicateur optique ou sonore actionné par l'unité de commande et de calcul.

## Revendications

1. Procédé de mesure du niveau de la surface libre d'un liquide contenu dans un réservoir et présentant une conductibilité thermique différente de celle du milieu situé au-dessus de cette surface libre, au moyen d'un capteur à fil chaud dont la résistance électrique varie fortement avec la température et d'un circuit pour stabiliser la tension aux bornes du fil du capteur, ce capteur étant agencé de manière à être plus ou moins refroidi par le liquide en fonction du niveau de sa surface libre, caractérisé en ce que (a) on échauffe le capteur jusqu'à une température prédéterminée To par effet Joule en l'alimentant sous tension constante, (b) on mesure le courant Io qui passe dans le fil du capteur à l'instant où la température To est atteinte et on coupe l'alimentation du capteur à cet instant, (c) on rétablit l'alimentation sous tension constante du fil du capteur à l'expiration d'un intervalle de temps prédéterminé mesuré à compter de l'instant de la coupure d'alimentation, pour relever le courant I passant dans le fil du capteur à l'expiration de cet intervalle de temps, et (d) on calcule le niveau du liquide à partir des valeurs de I et Io.

2. Procédé conforme à la revendication 1, caractérisé en ce qu'on mesure la température du liquide et on corrige le calcul du niveau du liquide en fonction de cette température.

3. Procédé conforme à l'une quelconque des revendications 1 et 2, caractérisé en ce qu'on mesure le courant dans le fil du capteur en prélevant la tension aux bornes d'une résistance placée en série avec le fil du capteur.

4. Procédé conforme à l'une quelconque des revendications 1 à 3, caractérisé en ce que, pour la mesure du niveau du liquide, on se rapporte à la courb de réponse du capteur.

5. Dispositif pour la mise en oeuvre du procédé conforme à la revendication 1, comprenant un capteur à fil chaud (1) alimenté par une source de tension ($+V_0$), un circuit (7) pour stabiliser la tension aux bornes du fil du capteur, caractérisé en ce qu'il comprend une unité de commande et de calcul (4) muni d'un premier moyen qui commande le pré-chauffage par effet Joule du fil du capteur jusqu'à une température To, qui coupe l'alimentation du capteur à l'instant où cette température est atteinte, et qui rétablit cette alimentation à l'expiration d'un intervalle de temps de refroidissement prédéterminé, d'un deuxième moyen qui mesure un paramètre fonction du courant passant dans le fil du capteur, aux deux instants bornant l'intervalle de temps de refroidissement, et un moyen de calcul sensible à ces mesures qui en déduit le niveau du liquide.

6. Dispositif conforme à la revendication 5, caractérisé en ce qu'il comprend une résistance placée en série avec celle du fil du capteur et un convertisseur analogique-numérique dont l'entrée est connectée aux bornes de cette résistance et dont la sortie (9) alimente l'unité de commande et de calcul (4) avec un signal numérisé représentatif du courant dans le fil du capteur.

7. Dispositif conforme à l'une quelconque des revendications 5 et 6, caractérisé en ce qu'il comprend un détecteur (6) sensible à la température du liquide Ta qui fournit à l'unité de commande et de calcul (4) un signal nécessaire au calcul d'une correction dans la mesure du niveau du liquide.

8. Dispositif conforme à la revendication 7, caractérisé en ce que l'unité de commande comprend une mémoire conservant une correspondance entre les diverses valeurs du signal Ta et les valeurs correspondantes de la correction.

9. Dispositif conforme à l'une quelconque des revendications 6 à 8, caractérisé en ce que le convertisseur analogique-numérique fournit à l'unité de commande et de calcul des valeurs numérisées fonctions du rapport de sa tension d'entrée à sa tension de référence.

10. Dispositif conforme à l'une quelconque des revendications 7 à 9, caractérisé en ce que l'unité de commande calcule un terme représentatif du niveau du liquide de la forme :

$$\frac{T - Ta}{To - Ta}$$

ou To et T sont les températures du fil du capteur au début et à la fin de la période de refroidissement, respectivement et Ta est la température ambiante.

11. Dispositif conforme à l'une quelconque des revendications 5 à 10, caractérisé en ce que l'unité de commande comprend une mémoire chargée avec la courbe de réponse du capteur, le moyen de calcul de l'unité de commande exploitant cette courbe pour produire une mesure du niveau de liquide à partir du rapport Mo/M, où Mo et M sont les nombres correspondants aux signaux numérisés fournis à l'unité de commande par le convertisseur analogique-numérique, aux deux bornes de l'intervalle de temps de refroidissement.

12. Dispositif conforme à l'une quelconque des revendications 5 à 11, caractérisé en ce que le circuit stabilisateur de tension (7) comprend des moyens (11,12,13, T₁) qui asservit la tension aux bornes du capteur à une tension de référence.

13. Dispositif conforme à la revendication 12, caractérisé en ce que ces moyens comprennent un amplificateur opérationnel (11) qui commande un transistor (T₁) placé dans le circuit d' alimentation du capteur.

14. Dispositif conforme à la revendication 13, caractérisé en ce qu'il comprend un transistor (T₂) commandé par l'unité (4) pour polariser le transistor(T₁) de manière à déclencher ou interrompre l'alimentation du capteur.

15. Dispositif conforme à l'une quelconque des revendications 5 à 14, caractérisé en ce qu'il comprend un indicateur optique ou sonore de la position de la surface libre du liquide, commandé par l'unité (4).

## Patentansprüche

1. Verfahren zum Messen des Niveaus der freien Oberfläche einer in einem Behälter aufbewahrten Flüssigkeit, wobei das zu messende Medium eine andere Wärmeleitfähigkeit hat als das Medium, das sich oberhalb der freien Oberfläche befindet, wobei ein Hitzdraht-Sensor, dessen elektrischer Widerstand in Abhängigkeit mit der Temperatur variiert und an dessen Anschlüssen eine durch einen Schaltkreis stabilisierte Spannung anliegt und dieser Sensor so angeordnet ist, daß er von der Flüssigkeit mehr oder weniger, in Abhängigkeit von der Füllstandshöhe der Flüssigkeit gekühlt wird, dadurch gekennzeichnet,
– daß der Sensor auf eine vorbestimmte Temperatur $T_O$ durch Anlegen einer konstanten Spannung geheizt wird,
– daß der Strom $I_O$ zu dem Zeitpunkt gemessen wird, in dem der Sensor die Temperatur $T_O$ erreicht und daraufhin der Strom abgeschaltet wird,
– daß die konstante Spannung nach Ablauf einer vorbestimmten Zeit nach vorgenanntem Abschalten erneut an den Sensor geschaltet wird und der Strom $I$ gemessen wird, welcher zu diesem Zeitpunkt durch den Sensor fließt,
– daß das Niveau der Flüssigkeit aus den Werten von $I$ und $I_O$ ermittelt wird.

2. Verfahren gemäß Anspruch 1, dadurch gekennzeichnet, daß die Temperatur der Flüssigkeit gemessen und die Berechnung des Niveaus anhand dieser Temperatur korrigiert wird.

3. Verfahren gemäß Anspruch 1 oder 2, dadurch gekennzeichnet, daß der durch den Sensor fließende Strom anhand des Spannungsabfalls an einem in Serie zu dem Sensor geschalteten Widerstand gemessen wird.

4. Verfahren nach Anspruch 1, 2 oder 3, dadurch gekennzeichnet, dass zur Messung des Niveaus die Ansprechkurve des Sensors berücksichtigt wird.

5. Vorrichtung zum Gebrauch des Verfahrens gemäss Anspruch 1 bestehend aus einem Hitzdraht-Sensor (1) der durch eine Spannungsquelle $+V_O$ gespeist wird und einer Schaltung (7), welche die Spannung an den Anschlußpunkten des Sensors konstant hält, dadurch gekennzeichnet, daß eine Kontroll- und Recheneinheit (4) vorgesehen ist, die
– mit einer ersten Einrichtung,
– das Aufheizen des Sensors bis zur Temperatur $T_O$ steuert,
– den durch den Sensor fließenden Strom bei Erreichen der Temperatur $T_O$ abschaltet und nach einer vorbestimmten Abkühlzeit die Spannungsquelle wieder an den Sensor schaltet,
– mit einer zweiten Einrichtung, welche den durch den Sensor fließenden Strom mißt, und
– mit einer Recheneinrichtung, die aus diesen Messungen den Flüssigkeitsspiegel ableitet.

6. Vorrichtung gemäß Anspruch 5, dadurch gekennzeichnet, daß in Serie mit dem Sensor ein Widerstand geschaltet ist, dessen Anschlüsse mit dem Eingang eines Analog/Digitalwandlers verbunden ist und dessen Ausgang digitalisierte Signale, welche den durch den Sensor fließenden Strom repräsentieren, an die Kontroll- und Recheneinheit liefert.

7. Vorrichtung entsprechend einem der Ansprüche 5 oder 6, dadurch gekennzeichnet, daß sie einen Detektor (6) beinhaltet, der die Temperatur $T_A$ der Flüssigkeit erfaßt und dieses Signal der Kontroll- und Recheneinheit (4) als Grundlage zur Berechnung eines Korrekturwertes liefert.

8. Vorrichtung entsprechend dem Anspruch 7, dadurch gekennzeichnet, daß die Kontrolleinheit einen Speicher hat, der die Zusammenhänge zwischen den unterschiedlichen Werten der Temperatur $T_A$ und den dazugehörigen Korrekturwerten beinhaltet.

9. Anspruch nach einem der Ansprüche 6 bis 8, dadurch gekennzeichnet, daß der Analog/Digitalwandler an die Kontroll- und Recheneinheiten digitalisierte Werte, die das Verhältnis zwischen der Eingangsspannung und der Differenzspannung am Analog/Digitalkonverter angeben, liefert.

10. Vorrichtung gemäß einem der Ansprüche 7 bis 10, dadurch gekennzeichnet, daß die Kontrolleinheit den das Niveau angebenden Wert anhand der Formel:

$$\frac{T - T_A}{T_0 - T_A}$$

berechnet, wobei $T_0$ und $T$ die Temperaturen des Hitzdraht-Sensors zu Beginn und am Ende des Abkühlungszeitraumes angeben und $T_A$ der Umgebungstemperaturwert ist.

11. Vorrichtung gemäß einem der Ansprüche 5 bis 10, dadurch gekennzeichnet, daß die Kontrolleinheit einen Speicher besitzt, in dem die Ansprechkurve des Sensors gespeichert ist, und die Recheneinheit die gespeicherte Kurve nutzt, um den Flüssigkeitsstand anhand des Verhältnisses

$$\frac{m_0}{m}$$

zu berechnen, wobei $m_0$ und $m$ digitalisierten Werten entsprechen, die der Recheneinheit vom Analog/Digitalwandler zu Beginn und am Ende des Abkühlintervalles geliefert werden.

12. Vorrichtung gemäß einem der Ansprüche 5 bis 11, dadurch gekennzeichnet, daß der Konstantspannungsschaltung (7), Mittel (11, 12, 13, T1) umfaßt, um die Spannung an die Anschlüsse des Sensors zu schalten.

13. Vorrichtung gemäß Anspruch 12, dadurch gekennzeichnet, daß diese Mittel einen Operationsverstärker (11) beeinhalten, der einen im Spannungsversorgungskreis des Sensors angeordneten Transistor (T1) kontrolliert.

14. Vorrichtung gemäß Anspruch 13, dadurch gekennzeichnet, daß ein von der Kontrolleinheit (4) kontrollierter Transistor T2 vorgesehen ist, der den Transistor (T1) so ansteuert, daß er die Spannung am Sensor ein- und ausschaltet.

15. Anspruch gemäß einem der Ansprüche 5 bis 14, dadurch gekennzeichnet, daß eine von der Einheit (4) kontrollierte optische oder akustische Anzeige für die Füllhöhe vorgesehen ist.

**Claims**

1. Process for measuring the level of the free surface of a liquid contained in a storage vessel and having a heat conductivity which is different from that of the medium situated above this free surface, by means of a hot wire sensor whose electrical resistance varies greatly with the temperature and of a circuit for stabilizing the voltage at the terminals of the sensor wire, this sensor being arranged so as to be cooled by the liquid to a greater or lesser degree as a function of the level of its free surface, characterized in that (a) the sensor is heated to a predetermined temperature To by a Joule effect by being supplied with a constant voltage, (b) the current Io flowing in the sensor wire at the instant when the temperature To is reached is measured and the supply to the sensor is cut at this instant, (c) the constant voltage supply to the sensor wire is restored at the end of a predetermined time interval measured from the instant of the cut in supply, in order to determine the current I flowing in the sensor wire at the end of this time interval, and (d) the level of the liquid is computed from the values of I and Io.

2. Process according to claim 1, characterized in that the temperature of the liquid is measured and the computation of the liquid level is corrected as a function of this temperature.

3. Process according to either of claims 1 and 2, characterized in that the current in the sensor wire is measured by determining the voltage at the terminals of a resistor placed in series with the sensor wire.

4. Process according to any one of claims 1 to 3, characterized in that reference is made to the sensor response curve in order to measure the level of the liquid.

5. Device for making use of the process according to claim 1, comprising a hot wire sensor (1) supplied by a voltage (+Vo) source, a circuit (7) for stabilizing the voltage at the terminals of the sensor wire, characterized in that it comprises a control and computing unit (4) equipped with a first device which controls the preheating of the sensor wire by a Joule effect up to a temperature To, which cuts the supply to the sensor at the instant when this temperature is reached, and which restores this supply at the end of a predetermined cooling time interval, with a second device which measures a parameter which is a function of the current flowing in the sensor wire, at two instants forming the bounds of the cooling time interval, and computing means sensitive to these measurements which deduces the liquid level therefrom

6. Device according to claim 5, characterized in that it comprises a resistor placed in series with that of the sensor wire and an analog-digital converter whose input is connected to the terminals of this resistor and whose output (9) supplies the control and computing unit (4) with a digitized signal representing the current in the sensor wire.

7. Device according to either of claims 5 and 6, characterized in that it comprises a detector (6) sensitive to the temperature of the liquid Ta which supplies the control and computing unit (4) with a signal required for computing a correction to the measurement of the liquid level.

8. Device according to claim 7, characterized in that the control unit comprises a memory storing a correlation between the various values of the signal Ta and the corresponding values of the correction.

9. Device according to any one of claims 6 to 8, characterized in that the analog-digital converter supplies the control and computing unit with digitized values which are functions of the relationship between its input voltage and its reference voltage.

10. Device according to any one of claims 7 to 9, characterized in that the control unit computes a term representing the level of the liquid, of the form:

$$\frac{T - Ta}{To - Ta}$$

where To and T are the temperatures of the sensor wire at the start and at the end of the cooling period, respectively, and Ta is the ambient temperature.

11. Device according to any one of claims 5 to 10, characterized in that the control unit comprises a memory loaded with the sensor response curve, use being made of this curve by the computing means of the control unit to produce a measurement of the liquid level from the ratio Mo/M, where Mo and M are the numbers corresponding to the digitized signals supplied to the control unit by the analog-digital converter, at the two bounds of the cooling time interval.

12. Device according to any one of claims 5 to 11, characterized in that the voltage stabilizer circuit (7) comprises means (11, 12, 13, $T_1$) which brings the voltage at the terminals of the sensor under the control of a reference voltage.

13. Device according to claim 12, characterized in that these means comprises an operational amplifier (11) which controls a transistor ($T_1$) placed in the sensor supply circuit.

14. Device according to claim 13, characterized in that it comprises a transistor ($T_2$) controlled by the unit (4) for polarizing the transistor ($T_1$) so as to switch the supply to the sensor on or off.

15. Device according to any one of claims 5 to 14, characterized in that it comprises an optical or sound indicator of the position of the free surface of the liquid, controlled by the unit (4).

**FIG-1**

**FIG-2**

FIG-3